# EUROPÄISCHE PATENTANMELDUNG

(11) **EP 1 637 275 A2**
(43) Veröffentlichungstag der Anmeldung: **22.03.2006**
(21) Anmeldenummer: 05019826.6
(22) Anmeldetag: 13.09.2005
(51) Int. Cl.: B23K 35/14, B23K 35/363

(54) **Lotpaste zum Hartlöten**

(30) Priorität: 16.09.2004 DE 202004014393 U
(71) Anmelder: Link, Günter, 38644 Goslar (DE)
(72) Erfinder: Link, Günter, 38644 Goslar (DE)

(57) **Zusammenfassung**

Lotpaste zum Hartlöten für die manuelle, mechanisierte und automatisierte Verlötung von Metallteilen mit Vakuumlöttechnik, dadurch gekennzeichnet, dass die Paste als flüssige Dispersionen aus Loten pulverförmiger Materialien aus der Gruppe der Metalle, Metallverbindungen und/oder deren Legierungen in wässriger Phase vorliegen und als organischer Binder wasserlösliche Polymere in einer Konzentration von 0,1 bis 1 % bezogen auf Metall genutzt werden und diese frei von organischen Lösemitteln sind.

## Beschreibung

Die in der Löttechnik eingesetzten Lote (Hartlote) sind auf die zu verbindenden Metalle abgestimmt, beispielsweise Al - Hartlot für Aluminium und Aluminiumlegierungen bzw. Ni - Lot für Edelstähle. Ni - Basislote sind in der Vakuumlöttechnik zur Erstellung hochbelastbarer Edelstahl- und Superlegierungsverbunde weit verbreitet, da sich grundwerkstoffähnliche Eigenschaftsmerkmale erzielen lassen. Die Vakuumatmosphäre verhindert eine Wechselwirkung der Lot- und Grundwerkstoffe mit der Umgebung. Von großem technischen Interesse ist das Vakuumlöten auch deshalb, weil es hochwertige Fügeverbunde zwischen gleichartigen und ungleichartigen Werkstoffen erlaubt und gleichzeitig auf den Einsatz hochkorrosiver Flussmittel verzichtet wird.

Der eingesetzte Lotwerkstoff kann, je nach geometrischer Ausführung der Bauteile, als Draht, Folie, Pulver oder Paste appliziert werden.

Die Vakuumlöttechnik eignet sich ausgezeichnet zum stoffschlüssigen Verbinden von metallischen Werkstoffen, insbesondere für Wabenkörper, wie sie für Katalysatorreaktoren in Verbrennungskraftmaschinen benötigt werden. Es ist bekannt, dass sich die Herstellung von Katalysator - Reaktoren für Verbrennungskraftmaschinen durch Verlotung von gewellten Blechen in der Praxis als sehr problematisch darstellt und demzufolge eine Reihe von Methoden und Verfahren entwickelt wurden.

Dabei unterscheidet man bei mit Bindemittel arbeitenden Materialen prinzipiell zwei Auftragsverfahren der zur Anwendung gelangenden Metalllote. Im mehrstufigem Verfahren, welches zunächst den Auftrag einer Binder bzw. Kleberschicht an der zu lötenden Kontaktstelle beinhaltet, wird in einem zweiten Arbeitsgang pulverförmiges Metalllot aufgetragen. Das einstufige Verfahren trägt eine Metalllotpaste in gewünschter Schicht auf die vorgesehene Kontaktstelle auf.

Die DE 2924592 beschreibt ein mehrstufiges Verfahren. Weiterführend zur o.g. Methode wurde in der Schrift DE 3726502 ein Verfahren zum besseren Handling der erhitzten Wabenkörper vorgestellt. Nachteilig ist hier die gezielte Dosierung des Lotmaterials. Die EP 0049489 arbeitet ebenfalls nach dem Prinzip der Bestäubung mit trockenem Lotpulver auf klebende Oberflächen, beansprucht aber ein Verfahren für extrem geringen Lotmengen, indem auf einen, aus organischem Material bestehender Haftklebstoff, welcher in einem leicht flüchtigem Lösemittel gelöst ist, Metallpulver aufgetragen wird. Durch das Entfemen des überschüssigen Metallpulvers wird das Verfahren 3-stufig. Die DE 3818512 sowie die GB 1334683 nutzen einen nicht näher modifizierten Haftkleber zur Vorbehandlung der Lamellenbleche. Die DE 4219145 arbeitet mit Fertigbauteilen, zumindest mit strukturierten Blechlagen auf denen sich noch Walzöl befindet. Diese werden mit einer Tensidlösung behandelt. Dabei sammelt sich das Walzöl zusammen mit dem Tensid bevorzugt in den zu verlötenden Spalten an. Später wird der Lotkörper mit Lotpulver in Kontakt gebracht. Das Pulver klebt an den Spalten, wobei allerdings kleine Metallteilchen bevorzugt und selektiv an den Kontaktstellen verkleben. Die DE 4416539 führt diese Idee dahingehend weiter, dass gleichzeitige zum Walzöl ein Haft- und Klebemittel verwendet wird, welches beim Gebrauch die Aggregatzustände flüssig/fest ausnutzt. Im flüssigen Bereich verklebt das Metallpulver, im kälteren Zustand ist es fest.

Sämtliche öffentlich gemachten Verfahren, die auf dem Prinzip der nachträglichen Pulverbestäubung beruhen, benötigen eine Feuchtvorbehandlung bzw. eine klebende Haftschicht auf der Kontaktstelle der Metalloberfläche. Die daraus resultierenden wesentlichen Nachteile sind: a) Eine Steuerung der anhaftenden Lotmenge ist nicht möglich, da immer nur eine Monolage an Teilchen die klebenden Oberfläche kontaktieren kann. Die Erhöhung der Metallmengen, die unter Umständen bei höheren Spalten und Kapillaren erforderlich wäre, scheidet technisch aus, sie ist nicht machbar. Und b) verschiebt sich das effektive Verhältnis Binder/Metall prozentual zu erhöhten Binderanteilen und damit in der Folge zu erhöhten Verbrennungsemissionen. Üblicherweise liegt im zweistufigen Verfahren ein Binder / Metalllotverhältnis von ca. 1:10 vor, d.h. 10% des aufgetragenen Materials muss beim Lötprozess verbrannt, bzw. zersetzt werden.

Das einstufige Verfahren, das Aufbringen von Lotpasten, gestattet die gezielte Erhöhung des Lotmetalls an der zu verlotenden Kontaktstelle beliebig. Verfahren, die eine Steuerung der Lotschichtdicke und damit auch der Menge an Metalllot erlauben, sind über die Dosierung von Lotpasten und Lotsuspensionen möglich.

Verfahrenstechnisch beschreibt die DE 2924592 das Aufbringen von Lotpaste z.B. durch Walzen sowie das Patent DD 247790 ein Verfahren, in dem das Objekt auf einen Tauchkörper gedrückt wird, auf dem sich ein Lötpastenkissen befindet. Die Höhe des Lötpastenkissens wird mit einem Rakel eingestellt. Andere Verfahren sind Bedrucken oder Besprühen, doch sind alle weiteren bekannten Auftragsverfahren denkbar.

Prinzipiell eröffnet das 1-Stufenverfahren der Lotpaste hinsichtlich ihrer Zusammensetzung zwei Möglichkeiten, zum einen die Nutzung organischer Binder in organischen Lösemitteln und zum anderen die Nutzung wässriger Bindersysteme.

Obwohl aus umwelt- und ökologischen Gründen wässrige Systeme zwingend geboten wären, finden wir in der geprüften Literatur nahezu ausnahmslos organische Binder in organischen Lösungen. Analog argumentiert die DE 4431723, die allerdings Metallpasten für das Anwendungsgebiet Leiterbahnen, Widerständen und Kondensatoren beschreibt, indem sie aussagt: Generell ist festzustellen, dass derzeit alle bekannten Pasten auf Basis organischer Lösemittel gegebenenfalls organischem Bindemittel aufgebaut sind. Bindemittel und Pastenbindemittel für Nickel-Chromlote, die zur Herstellung von Katalysator - Reaktoren eingesetzt werden, sind u.a. in den Schriften DE 19711562 und DE 4315475 offengelegt. Beide Rezepturen beinhalten hohe Mengen an polymeren, organischen Bindemitteln und organischen Lösungsmitteln, wie z.B. Glykole, Glykolether oder höhersiedende Alkohole. In der DE 69213084 werden Rezepturen für Lotpasten vorgestellt, die zusätzliche Flussmittel, wie Harze, Kolophonium, Pflanzenöle oder Mineralöle (DE 29918455, DE 2042370) beinhalten, um die Benetzung der Bleche durch das Metalllot zu fördem. Die DD143052 beschreibt eine Lotpaste, die rückstandsarm verbrennt. Sie ist wasserfrei und nutzt ein organisches Glykol - Tragant - Gel. Allen bekannten Lotpastenrezepturen ist gemeinsam, das eine lange Lagerzeit zur Sedimentierung der spezifisch schweren Metalle und zur Serumbildung führt, d.h. die Lagerstabilität kann nicht gewährleistet werden. Aus diesem Grund werden zusätzliche in organischen Lösemitteln lösliche Thixotropiemittel wie Polyethylenwachse oder hydriertes Rizinusöl zugegeben. In der Summe beinhalten solche, auf organische Bindemittel formulierten Lotpasten, bis zu 40% organische Substanzen. Hauptnachteil aller organischen Systeme ist, das sie die technischen Forderung einer möglichst rückstands- und emissionsfreien Verbrennung nicht genügen.

Um die Mengen an organischen Substanzen zu verringern, muss für das Bindemittel ein Wassersystem eingesetzt werden. Bekannte wässrige Bindemittel liegen in der Wasserphase gelöst, emulgiert oder dispergiert vor. Voraussetzung zur Herstellung wässriger Pasten ist allerdings, dass das Metalllot mit Wasser keine Reaktion zeigt. Die DE 4133487 beschreibt die Reaktion von Metallpulvern mit Bindemitteln wie sie üblicherweise in Wasserbasislacken eingesetzt werden. Die Funktion der dort genutzten Bindemittel ist dabei die Bildung eines zusammenhängenden Films, der das aufzubringende Metallpulver einschließt, fixiert und schützt. Die Mengen an Bindemittel bezogen auf Metall bewegen sich jedoch bei Lacken in einer Größenordnungen von 5 - 300%.

Die US 3309239 beschreibt eine auf Wasser basierte und geschützte Metallpaste, in welcher Ethylhydroxyethylcellulose, Dextrin, Ethylenglykol oder Polyethylenglykol sowie Konservierungsstoffe eingesetzt werden. Nachteilig ist hier der mögliche mikrobiologische Befall, der die Mitverwendung von Konservierungsstoffen erforderlich macht. Die DE 19731151 betrifft Lotpasten zum Hartlöten für Aluminium, die organische Bindemittel, organische Lösemittel und rheologische Hilfsmittel enthalten und wasserverdünnbar ist. Der organische Binderanteil hier beträgt 25-35%.

Es war daher die Aufgabe der Erfindung, Pasten bereitzustellen, die hinsichtlich ihrer technischen Eignung den bekannten Pasten nicht nachstehen, andererseits aber die geschilderten Nachteile der Pasten des Standes der Technik nicht aufweisen. Ziel ist die Schaffung einer kostengünstigen Lotpaste, die den unterschiedlichen Bedingungen und verschiedenen Lötaufgaben angepasst werden kann. Aufgabe ist es daher, eine lagerfähige, biologisch nicht angreifbare und in der Konsistenz modifizierbare Lotpaste zu entwickeln, die dosierbar, einen maschinell steuerbaren, verlustfreien Materialauftrag durch kontinuierliche und diskontinuierliche Applikation zur Erzielung einstellbarer Schichtstärken gewährleistet. Des weiteren sollen die erfindungsgemäß erzeugbaren Metalllotpasten nach einem bei Raumtemperatur oder bei höherer Temperatur forciertem, emissionsfreien Trocknungsvorgang zu Auftragsschichten mit Metallgehalten von 99,0-99,9% führen, die grifffest und handelbar sind, um weitere konstruktiv erforderliche Arbeitsschritte zu ermöglichen. Durch die extrem hohen Metallgehalte ist das Auftreten von organischen Spalt- und Verbrennungsprodukten nahezu vollkommen auszuschließen und metallurgisch einwandfreie Lötergebnisse werden gewährleistet.

Die Erfindung betrifft Pasten, die diese Aufgabe erfüllen. Es handelt sich dabei um Lotpasten zum Hartlöten, vorzugsweise für die mechanisierte und automatisierte Verlötung von Metallteilen mit Vakuumlöttechnik, wobei die Pasten als flüssige Dispersionen aus Loten pulverförmiger Materialien aus der Gruppe der Metalle, Metallverbindungen und/oder deren Legierungen in wässriger Phase vorliegen, dadurch gekennzeichnet, dass die organische Bindersubstanz wasserlösliche Polymere sind, die in einer Konzentration von < 1,0%, bevorzugt < 0,5%, besonders bevorzugt zwischen 0,1-0,2% bezogen auf Metall angewandt werden. Der verschwindend geringe, aber ausreichende Binderanteil bewegt sich damit in der Größenordnung von Additiven.

Die erfindungsgemäßen Pasten sind frei von organischen Lösemitteln und können ohne den Einsatz organischer Lösemitteln zu funktionsfähigen Schichten verarbeitet werden. Die erfindungsgemäßen Pasten sind mit Wasser verdünnbar. Im Bedarfsfalle sind sie während der Verarbeitung, z.B. bei der Reinigung der Verarbeitungsanlagen, durch Wasser leicht zu entfemen und erfordern somit nicht die Anwendung von organischen Lösemitteln. Darüber hinaus sind die erfindungsgemäßen Pasten geruchsneutral und unbrennbar. Ökologische Beeinträchtigungen, wie sie bei den derzeit eingesetzten Pasten bemängelt werden, sind bei den erfindungsgemäßen Pasten nicht zu erwarten.

Die erfindungsgemäßen Pasten nutzen als Bindersubstanz organische Bindemittel, sofern sie wasserlöslich, wasseremulgierbar bzw. wasserdispergierbar sind und in einer Konzentration < 1% bezogen auf Metall trockene, auf dem zu verlötenden Untergrundsmetall fest haftende Schichten erzeugen. Bevorzugt geeignete erfindungsgemäße Pasten enthalten lösliche organische Acrylpolymere in einer Konzentration von < 0,5% bezogen auf Metall, wobei deren Löslichkeit durch die Anwesenheit funktioneller versalzbarer Carboxylgruppen gewährleistet wird. Üblicherweise beträgt der Bindergehalt ca. 0,20%. Je nach den spezifischen Eigenschaften des verwendeten Metalllots (Teilchenform und -größe, spez. Gewicht) und organischem Polymer und späterer Anwendung kann im Extremfall der Binderanteil bis auf 0,05% bezogen auf Metall reduziert werden. Als erfindungsgemäße, wasserlösliche Polymere werden die Salze einwertiger Kationen, wie Alkali- und/oder Ammonium- und/oder Aminsalze von Polyacryl-/Polymethacrylsäuren bzw. Copolymeren von Polyacryl-/Polymethacrylsäuren und Acrylsäure-/Methacrylsäureestern bzw. Copolymeren von Polyacryl-/Polymethacrylsäuren und Acrylamid beansprucht. Diese können allein und in Kombination mit Hydroxyl-, Amino-, Urethan-, Pyrolidon-, Harnstoffgruppen aufweisenden in Wasser löslichen Verdickungsmitteln genutzt werden.

Die erfindungsgemäßen Pasten können dadurch hergestellt werden, dass man die pulverförmigen Materialien in Wasser auf eine bestimmte Viskosität einstellt, wobei deren Charakteristik durch die Auswahl des organischen Bindematerials bestimmt wird. Dabei kann es vorteilhaft sein, die rheologischen Eigenschaften der Pasten zusätzlich durch oberflächenaktive Netzmittel zu beeinflussen.

Die Auswahl der in der Lotpaste vorhandenen Bindemittel bestimmt auch den Anteil möglicher Spaltprodukte, d.h. den Anteil von Verbrennungs- und Abgasen im Hochvakuum, wobei wir davon ausgehen können, dass die erfindungsgemäßen Lotpasten gegenüber dem Stand der Technik deutliche Vorteile zeigen.

Gegenstand dieser Erfindung ist auch die Verwendung der erfindungsgemäßen Pasten. Primär sind sie zur Belotung von Metallen, insbesondere Eisen und Edelstahl hervorragend geeignet. Die Pasten werden durch übliche Applikationsverfahren auf das Substrat aufgebracht z.B. durch Spritzen, Schleudern, Drucken, Rollen, Walzen, Streichen, Rakeln, Gießen, Tauchen usw.

### Beispiele

### Beispiel 1

### Herstellung Lösung A

In Wasser wurden unter Rühren 0,33% Deuteron® XG ¹⁾ gelöst, danach erfolgt Zugabe von 3,32% Latekoll® D, 25%-ig in Wasser ²⁾, abschließend wird ein pH-Wert von 7 bis 8 mittels NH₃ - Lösung eingestellt.

Zur Herstellung einer Lotmetallpaste wurden 85% Lotmetallpulver NICROBRAZ L.C.³⁾ mit einer Korngröße von 20 bis106 µm mit 15% der obigen Lösung A durch Dispergieren mittels Dissolver (1500 U/min) vereinigt und 10 Minuten dispergiert.

Die Viskosität beträgt bei niederer Scherung (1 U/min) 84.000 mPas und bei hoher Scherung (100 U/min) 5980 mPas.

Die Lotpaste eignet sich hervorragend zum Spritzauftrag auf das Werkstück.

### Beispiel 2

### Herstellung Lösung B

In Wasser wurden unter Rühren 0,5% Collacral® DS 6256⁴⁾ gelöst und mittels NH₃ - Lösung auf einen pH-Wert von 7 bis 8 gestellt.

Zur Herstellung einer Lotmetall-Paste wurden 85% Lotmetallpulver NICROBRAZ L.C.³⁾ mit einer Korngröße von 20 bis106 µm mit 15% der obigen Lösung B durch Dispergieren mittels Dissolver (1500 U/min) vereinigt und 10 Minuten dispergiert.

Die Viskosität beträgt bei niederer Scherung (1 U/min) 330.000 mPas und bei hoher Scherung (100 U/min) 33.800 mPas.

Die Lotpaste kann z.B. durch Walzen auf das Werkstück aufgetragen werden.

### Beispiel 3

### Herstellung Lösung C

In Wasser wurden unter Rühren 0,53% Walocel® CRT 40.000⁵⁾ gelöst, danach erfolgt Zugabe von 6,64% Latekoll® D, 25%-ig in Wasser²⁾ , abschließend wird ein pH-Wert von 7bis 8 mittels NH₃ - Lösung eingestellt.

Zur Herstellung einer Lotmetall-Paste wurden 85% Lotmetallpulver NICROBRAZ L.C.³⁾ mit einer Korngröße von 20 bis 106 µm mit 15% der obigen Lösung C durch Dispergieren mittels Dissolver (1500 U/min) vereinigt und 10 Minuten dispergiert.

Die Viskosität beträgt bei niederer Scherung (1 U/min) 60.332 mPas und bei hoher Scherung (100 U/min) 10.000 mPas.

Die Lotpaste kann z.B. durch Rakeln auf das Werkstück aufgetragen werden.
1) Anionisches Heteropolysaccharid (Xanthagalactomannan) der Firma Deuteron GmbH, Achim, D
2) Polyacrylat der Firma BASF AG, Ludwigshafen, D
3) Metalllot (14%Cr,74-75%Ni, 4-5%Si, 3%B, 3%Fe) der Firma Wall Colmonoy Corporation, Stephenson, UK
4) Hochpolymeres, synthetisches Verdickungsmittel auf Acrylatbasis der Firma BASF AG, Ludwigshafen, D
5) Carboxymethylcellulose der Firma Wolff Cellulosics - Wolff Walsrode AG, Walsrode, D

## Patentansprüche

1. Lotpasten zum Hartlöten für die manuelle, mechanisierte und automatisierte Verlötung von Metallteilen durch Vakuumlöttechnik, **dadurch gekennzeichnet, dass** die Pasten als flüssige bis plastische Dispersionen aus Loten pulverförmiger Materialien aus der Gruppe der Metalle, Metallverbindungen und/oder deren Legierungen in wässriger Phase vorliegen und als organischer Binder wasserlösliche Polymere in einer Konzentration von 0,05-1% bezogen auf Metall genutzt werden und diese frei von organischen Lösemitteln sind.

2. Lotpasten gemäß Anspruch 1, **dadurch gekennzeichnet, dass** die Menge an wasserlöslichem, organischem Polymer < 1,0%, bevorzugt zwischen 0,1-0,2% beträgt,

3. Lotpasten gemäß einem der Ansprüche 1 oder 2, **dadurch gekennzeichnet, dass** das organische Polymer wasserlöslich ist und funktionelle versalzbare Carboxylgruppen besitzt.

4. Lotpasten gemäß Anspruch 3, **dadurch gekennzeichnet, dass** als wasserlösliche Polymere die Salze einwertiger Kationen von Polyacryl-/Polymethacrylsäuren bzw. Copolymeren von Polyacryl-/Polymethacrylsäuren und Acrylsäure-/Methacrylsäureestern bzw. Copolymeren von Polyacryl-/Polymethacrylsäuren und Acrylamid benutzt werden.

5. Lotpasten gemäß Anspruch 3 und 4, **dadurch gekennzeichnet, dass** die einwertigen Salze von Polyacryl-/Polymethacrylsäuren bzw. Copolymeren von Polyacryl-/Polymethacrylsäuren und Acrylsäure-/Methacrylsäureestern, bzw. Copolymeren von Polyacryl-/Polymethacrylsäuren und Acrylamid sind und diese allein und in Kombination mit Hydroxyl-, Amino-, Urethan-, Pyrolidon-, Harnstoffgruppen aufweisenden in Wasser löslichen Verdickungsmitteln genutzt werden.

6. Lotpasten gemäß einem oder mehrerer Ansprüche 1 bis 5, **dadurch gekennzeichnet, dass** sie einen Metallgehalt von 5-99,95% aufweisen

7. Lotpasten gemäß einem der Ansprüche 1 bis 6, **dadurch gekennzeichnet, dass** sie einen Metallgehalt von >99% aufweisen.
